# EUROPÄISCHE PATENTSCHRIFT

(11) **EP 0 680 991 B1**
(45) Veröffentlichungstag und Bekanntmachung des Hinweises auf die Patenterteilung: **25.08.1999**
(21) Anmeldenummer: 95106152.2
(22) Anmeldetag: 25.04.1995
(51) Int. Cl.: C08J 3/07, C08L 83/04

(54) **Verfahren zur Herstellung wässriger Siliconemulsionen**
Process for the preparation of aqueous silicone emulsions
Procédé de préparation d'émulsions aqueuses de silicone

(30) Priorität: 02.05.1994 DE 4415322
(43) Veröffentlichungstag der Anmeldung: 08.11.1995
(73) Patentinhaber: Wacker-Chemie GmbH, 81737 München (DE)
(72) Erfinder: Rautschek, Holger, Dr., D-01612 Nünchritz (DE); Nitz, Thomas, D-01612 Grödel (DE); Otto, Reiner, D-01612 Nünchritz (DE); Beuschel, Günther, D-01612 Nünchritz (DE)
(74) Vertreter: Zöllner, Gudrun

(56) Entgegenhaltungen:
- EP-A- 0 418 479
- EP-A- 0 442 098
- EP-A- 0 463 431
- US-A- 2 947 715
- CHEMICAL ABSTRACTS, vol. 98, no. 8, 21.Februar 1983 Columbus, Ohio, US; abstract no. 55144, XP002000356 & CS-B-196 141 (J. KALAL) 15.Juni 1982

## Beschreibung

Die Erfindung betrifft ein Verfahren zur Herstellung wäßriger Siliconemulsionen unter Verwendung einer in einem organischen Lösemittel gelösten, polymeren Organosiliciumverbindung. Siliconemulsionen haben vielfältige Einsatzmöglichkeiten, z.B. als Hydrophobier-, Imprägnier- oder Bindemittel für anorganische oder organische Materialien.

Als polymere Organosiliciumverbindungen für Emulsionen können höhermolekulare lineare, verzweigte oder vernetzte Organosiliciumverbindungen eingesetzt werden. Bei Raumtemperatur sind derartige Produkte hochviskos bis fest, was eine weitere Verarbeitung erschwert. Deshalb werden diese polymeren Siloxane meist als Lösung in aromatischen Lösemitteln, beispielsweise 60%-ig in Toluol oder Xylol, eingesetzt. Der hohe Gehalt an brennbaren und gesundheitsschädlichen Lösemitteln ist sowohl aus Gründen des Arbeits-, Gesundheits- und Umweltschutzes ungünstig als auch mit hohen Kosten verbunden, da bei Verdünnungs- und Reinigungsprozessen generell wieder auf organische Lösemittel zurückgegriffen werden muß.

Eine Möglichkeit der Verminderung des Einsatzes organischer Lösemittel ist die Verwendung wäßriger Emulsionen, die beispielsweise durch Emulgieren von Siliconharzlösungen hergestellt werden und dann beliebig mit Wasser verdünnbar sind (GB 20 92 608). Dabei ist man bestrebt, den Anteil an organischen Lösemitteln in den Emulsionen zu minimieren, z. B. mittels einer speziellen Emulgatorauswahl (EP 484001).

Der volle Vorteil wäßriger Formulierungen kommt allerdings erst dann zum Tragen, wenn diese im wesentlichen frei von organischen Lösemitteln sind. EP 098 940 beschreibt ein Verfahren, bei dem ein flüssiges oligomeres Siloxan, welches noch bis zu 40 Mol-% Alkoxygruppen enthält, mit Polyvinylalkohol oder einem Celluloseether emulgiert wird, wobei dann in dieser Emulsion die Kondensation des flüssigen Oligoorganosiloxans zu einem hochviskosen oder festen Polyorganosiloxan erfolgt. Die Nachteile dieses Verfahren bestehen in zusätzlichem technologischen Aufwand, da die Synthese des flüssigen oligomeren Siloxans eine andere Technologie als die Synthese der polymeren Organosiloxane erfordert und die Kondensation in der Emulsion nur schwer kontrollierbar ist. Außerdem beeinträchtigen während der Kondensation freigesetzte Alkohole bekanntermaßen die Stabilität von Emulsionen.

Die angeführten Nachteile sind auch auf Emulsionen von flüssigen oligomeren Organosiloxanen, die erst vor der Anwendung mit Kondensationskatalysatoren versetzt werden, zutreffend (EP 342 519).

Es ist weiterhin bekannt, Emulsionen, die frei von organischen Lösemitteln sind, aus Mischungen von hochviskosen bzw. festen Polyorganosiloxanen und niederviskosen oligomeren oder monomeren Organosilanen bzw. Organosiloxanen herzustellen (EP 366 133).

DE 21 58 348 beschreibt ein Verfahren zur Herstellung von Emulsionen auf Basis hochviskoser, zu Kautschuken vernetzbarer Siloxane, bei dem eine stark verdünnte Voremulsion, die ≥ 150 % Wasser und ≥ 8 % Emulgator, bezogen auf das Siloxan, enthält, hergestellt wird und diese Emulsion durch Abdestillation eines Lösemittel/Wasser-Gemisches aufkonzentriert wird. Dieses Verfahren benötigt eine vergleichsweise hohe Emulgatormenge, was bei vielen Anwendungen unerwünscht ist und auch die Kosten erhöht. Der mit dem beschriebenen Verfahren erreichbare maximale Siloxangehalt liegt bei 45 % und es verbleiben 5 bis 7 % Lösemittel in der Emulsion.

Es bestand daher die Aufgabe, ein Verfahren zu finden, das es gestattet, stabile, wäßrige, im wesentlichen lösemittelfreie Siliconemulsionen herzustellen, bei denen die Siloxankomponente nach üblichen Verfahren zur Herstellung von Polyorganosiloxanen mit einem definierten Kondensationsgrad hergestellt werden kann und die bezüglich der Emulgatorauswahl und Emulgatorkonzentration flexibel sind.

Diese Aufgabe wird gelöst, indem erfindungsgemäß unter intensivem Vermischen zu 100 Gew.-Teilen einer in einem organischen Lösemittel gelösten, polymeren Organosiliciumverbindung der allgemeinen Formel (I)

Rₐ (R¹O)_{b}SiO_{(4-a-b)/2} (I),

wobei R gleiche und/oder verschiedene, gesättigte und/oder ungesättigte, substituierte und/oder unsubstituierte einwertige Kohlenwasserstoffreste mit 1 bis 30 Kohlenstoffatomen sowie R¹ Wasserstoff und/oder C₁₋₄-Alkyl bedeuten, a einen Wert zwischen 0,6 und 2,1 sowie b einen Wert zwischen 0 und 0,5 annehmen, 0,1 bis 20 Gew.-Teile eines Emulgators sowie 1 bis 50 Gew.-Teile, vorzugsweise 5 bis 25 Gew.-Teile, Wasser gegeben werden, nach Erreichen einer homogenen, nicht mehr fließfähigen Mischung das organische Lösemittel als Lösemittel/Wasser-Gemisch abgetrennt wird und abschließend die für das Erreichen der gewünschten Konzentration benötigte Wassermenge sowie gegebenenfalls bekannte Additive homogen eingearbeitet werden.

Als polymere Organosiliciumverbindungen werden vorzugsweise lineare, verzweigte oder vernetzte, polymere Organosiliciumverbindungen der allgemeinen Formel (I), wobei a einen Wert zwischen 0,6 und 1,6 sowie b einen Wert zwischen 0,001 und 0,1 oder wobei a einen Wert zwischen 1,8 und 2,1 sowie b einen Wert zwischen 0 und 0,05 annehmen, eingesetzt. Diese Verbindungen sind bei Raumtemperatur meist fest oder hochviskos und sollten ein mittleres Molekulargewicht (Gewichtsmittel) von vorzugsweise größer 2500 g/mol aufweisen, wobei Werte größer 5000 g/mol besonders bevorzugt sind. Lineare Siloxane sind als Siliconöle bekannt, verzweigte oder vernetzte werden als Siliconharze bezeichnet. Die Verwendung derartiger Verbindungen zur Herstellung von Emulsionen ist bekannt.

Als Siliconöle werden siliciumorganische Verbindungen bezeichnet, bei denen in der allgemeinen Formel (I) a Werte von 1,8 bis 2,2 und b Werte von 0 bis 0,01 annimmt und welche eine Viskosität von 100 bis 1 000 000 mPas, vorzugsweise von 200 bis 60 000 mPas, aufweisen. Es können auch Mischungen von hochviskosen Siliconölen mit niedrigviskosen Siliconölen oder cyclischen oligomeren Diorganosiloxanen verwendet werden. Besonders bevorzugt sind Polydimethylsiloxane mit Hydroxy-, Trimethylsiloxy- und/oder Dimethylvinylsiloxy-Endgruppen. Die Herstellung der Siliconöle ist bekannt. Handelsübliche Siliconöle werden beispielsweise durch Polymerisation von cyclischen und/oder durch Polykondensation von linearen, endständige kondensationsfähige Gruppen aufweisenden Siloxanen erhalten. Durch die Zugabe eines Kettenstoppers, wie z. B. eines trimethylsiloxyterminierten Siloxanes, gelingt es, beliebige Kettenlängen einzustellen. Siliconöle liegen handelsüblich meist in lösemittelfreien Zustand vor. Höherviskose Siliconöle können auch, des leichteren Handlings wegen, in Form von Lösungen angeboten.

Siliconharze sind Verbindungen, die überwiegend aus Einheiten der Formel RSiO_{3/2} bestehen. Das entspricht in Formel (I) Verbindungen mit Werten für a von 1 bis 1,5 und b von 0 bis 0,5. Siliconharze erhält man bekanntermaßen, indem di- und/oder trifunktionelle Organochlorsilane und/oder Organoalkoxysilane durch Hydrolyse und nachfolgende Kondensation in Gegenwart von Katalysatoren, meist metallorganischen Verbindungen, und unter Verwendung eines Lösemittels miteinander, meist in einem mehrstufigem Prozeß, umgesetzt werden. Siliconharze werden in Form von Lösungen oder als Festharz gehandelt.

Beispiele für die Reste R in der allgemeinen Formel (I) sind Methyl-, Ethyl-, Propyl-, Octyl- und/oder Phenylgruppen. Vorzugsweise sind mehr als 50 % der Reste R Methylgruppen und 1 bis 20 % der Reste R Kohlenwasserstoffreste mit mehr als 4 Kohlenstoffatomen. Beispiele für die Reste R¹ sind Wasserstoff, Methyl- und/oder Ethylgruppen.

Als Lösemittel werden vorzugsweise Lösemittel mit einem Siedepunkt (bei Normaldruck) kleiner 200°C verwendet, beispielsweise Benzol, Toluol, Xylol oder Testbenzin. Besonders bevorzugt als Lösemittel ist Toluol. Vorteilhafterweise wird das Lösemittel verwendet, welches auch bei der Herstellung der polymeren Organosiliciumverbindung eingesetzt wird, so daß kein Umlösevorgang erforderlich ist. Die Polyorganosiloxanlösung kann direkt so verwendet werden, wie sie nach der Herstellung anfällt, beispielsweise in einer Konzentration von mindestens 60 Gew.-%, vorzugsweise von 80 bis 95 Gew.-%. Dadurch ist das erfindungsgemäße Verfahren besonders effektiv.

Als Emulgatoren können beim erfindungsgemäßen Verfahren alle Emulgatoren eingesetzt werden, die für die Herstellung von stabilen siliconhaltigen wäßrigen Emulsionen bekannt sind, beispielweise anionische, kationische oder nichtionogene Emulgatoren. Nichtionogene Emulgatoren, wie z. B. Polyethylenglycolether und -ester von natürlichen und/oder synthetischen Alkoholen bzw. Carbonsäuren mit 8 bis 24 Kohlenstoffatomen und von natürlichen Glyceriden, Alkylpolyglycoside, partiell oder vollständig verseiftes Polyvinylacetat, wasserlösliche Celluloseether oder deren Gemische, sind besonders bevorzugt. Der Emulgator wird bevorzugt in Mengen von weniger als 5 Gew.-%, bezogen auf die polymeren Organosiliciumverbindung, zugesetzt.

Das Vermischen der gelösten polymeren Organosiliciumverbindung mit dem Emulgator und dem Wasser kann entweder nacheinander oder gleichzeitig erfolgen. Es ist auch möglich, Emulgator und Wasser vorzumischen, und diese Mischung mit der Organosiliciumlösung zu vereinigen.

Der Mischvorgang erfolgt in einem geeigneten Aggregat mit Knet-und/oder Rühreinrichtung. Die gleichzeitige Anwendung eines Rotor-Stator Homogenisators ist vorteilhaft.

Nachdem eine homogene, nicht mehr fließfähige Mischung erhalten wurde, wozu im Durchschnitt eine Mischzeit von 5 min bis 4 h erforderlich ist, erfolgt die Abtrennung des Lösemittels unter Fortsetzung des Mischvorganges. Üblicherweise wird das Lösemittel durch Destillation bei vermindertem Druck und Temperaturen zwischen 50 und 100°C entfernt. Es ist jedoch ebenfalls möglich, mittels einer bei vermindertem Druck durchgeführten Wasserdampfdestillation das Lösemittel zu entfernen. Aus dem erhaltenen Lösemittel/Wasser-Gemisch kann nach der Trennung das Wasser, falls erforderlich, in den Prozeß zurückgeführt werden. Vorzugsweise wird jedoch die Wassermenge, die vor der Abtrennung des Lösemittels zugegeben wird, so bemessen, daß während der Abtrennung keine Wassernachdosierung erforderlich ist.

Zur Erreichung spezieller Eigenschaften, beispielsweise von Alkalistabilität bei Verwendung im Bautenschutz, ist es möglich, nach Abtrennung des organischen Lösemittels 1 bis 100 Gew.-Teile, bevorzugt 5 bis 20 Gew.-Teile, einer flüssigen monomeren, oligomeren und/oder polymeren Organosiliciumverbindung homogen einzuarbeiten. Als monomere Organosiliciumverbindung können dabei eine oder mehrere Verbindungen der allgemeinen Formel

R²Si(R³O)₃ (II),

wobei R² gesättigte und/oder ungesättigte, substituierte und/oder unsubstituierte einwertige Kohlenwasserstoffreste mit 4 bis 30 Kohlenstoffatomen sowie R³ Wasserstoff und/oder C₂₋₄-Alkyl bedeuten, als oligomere Organosiliciumverbindung ein partielles Hydrolysat und/ oder Kondensat von einer oder mehrerer Verbindungen der allgemeinen Formel

RₐSi(R¹O)_{b} (III),

wobei R und R¹ die oben angegebene Bedeutung sowie a einen Wert von 0 oder 1 und a+b einen Wert von 4 haben, mit einer Molmasse kleiner 1000 g/mol, sowie als polymere Organosiliciumverbindung eine Verbindung der allgemeinen Formel (I) mit einer Viskosität bei Raumtemperatur von weniger als 100 000 mm²/s eingesetzt werden. Ebenfalls möglich ist der Zusatz organischer Lösemittel, wie z. B. Testbenzin, falls dies für spezielle Einsatzzwecke gefordert wird.

Abschließend, entweder sofort nach Abtrennung des Lösemittels oder nach dem homogenen Einarbeiten der flüssigen monomeren, oligomeren und/oder polymeren Organosiliciumverbindung oder anderer spezieller Zusätze wird die homogene, nicht mehr fließfähige Mischung durch rasches, intensives Vermischen mit Wasser in eine flüssige "Öl in Wasser"-Emulsion überführt und auf die gewünschte Konzentration verdünnt.

Je nach Verwendungszweck können der Siliconemulsion weitere Bestandteile z.B. Katalysatoren, Pigmente, Verdickungsmittel und Konservierungsmittel als Additive zugesetzt werden.

Die erfindungsgemäß hergestellten Siliconemulsionen enthalten 10 bis 70 Gew.-%, vorzugsweise 30 bis 60 Gew.-% Organosiliciumverbindung.

Mit dem erfindungsgemäßen Verfahren werden äußerst stabile und sehr feinteilige Emulsionen erhalten. Überraschenderweise gelingt es, aus der homogenen, nicht mehr fließfähigen Organosiliciumverbindung/Lösemittel/Emulgator/Wasser-Mischung das Lösemittel so weit zu entfernen, daß Lösemittelgehalte von 0,1 Gew.-% und weniger erreichbar sind.

Die Eigenschaften der nach dem erfindungsgemäßen Verfahren hergestellten Siliconemulsionen können der jeweiligen Anwendung angepaßt werden, da keine Einschränkungen bezüglich Art und Menge der Organosiliciumverbindungen, des Emulgators oder der zu verwendeten Additive vorliegen. Beispiele sind die Anwendung als Bautenschutzmittel oder als Bindemittel in Fassadenfarben und anderen Anstrichstoffen, als Hydrophobiermittel und als Imprägniermittel, z. B. für anorganische Fasern.

### Ausführungsbeispiele

### Beispiel 1

In einem heizbaren Mischer mit Ankerrührwerk, Abstreifern, Strombrecher und Rotor-Stator Homogenisator wurden 1800 g einer 80%-igen Lösung eines Polymethylsiloxans in Toluol vorgelegt (M_{w} = 5880 g/mol, [OH] = 0,5 Gew.-%, [OMe] = 2,9 Gew.-%, Viskosität der Harzlösung bei 25°C = 3,5 Pas). Eine Mischung aus 40 g eines ethoxylierten Triglycerides (HLB = 18,1), 40 g eines ethoxylierten Tridecylalkoholes (HLB = 11,4) und 400 g Wasser wurden 15 Minuten intensiv eingemischt. Es entstand eine homogene, nicht mehr fließfähige, weiße Mischung. Bei 50 bis 60 °C und 20 kPa wurden zu gleichen Teilen Wasser und Toluol abdestilliert. Durch Zugabe von 800 g Deionat über einen Zeitraum von 10 min wurde die Emulsion fertiggestellt. Die erhaltene Emul-sion wies einen Toluolgehalt von 0,06 Gew.-% auf, 98% der Emulsi-onströpfchen waren kleiner als 1µm. Der Anteil an nichtflüchtigen Bestandteilen betrug 62 Gew.-%. Nach 10 min bei 3000 min⁻¹ in der Zentrifuge (Zentrifugentest) waren keine Veränderungen zu beobachten.

### Beispiel 2

Durchführung analog Beispiel 1. Als polymere Organosiliciumverbindung wurde eine 90%ige Lösung eines Polymethylsiloxans in Toluol verwendet (M_{w} = 7000 g/mol, [OH] = 0,2 Gew.-%, [OMe] = 2,1 Gew.-%, Viskosität der Harzlösung bei 25°C = 50 Pas). Es wurde eine Toluol/Wasser-Mischung im Verhältnis 1 zu 2 abdestilliert. Die nach Zugabe von 1000 g Wasser erhaltene Emulsion enthielt 59 Gew.-% nichtflüchtige Bestandteile und wies einen Toluolgehalt von 0,2 Gew.-% auf, 98% der Emulsionströpfchen waren kleiner als 1µm. Im Zentrifugentest waren nach 10 min bei 3000 min⁻¹ keine Veränderungen zu beobachten.

### Beispiel 3

Durchführung analog Beispiel 2, jedoch wurden ein 50 l Technikumsmischer mit Rotor/Stator im Bypass sowie die 16-fachen Ausgangsmengen von Beispiel 2 eingesetzt. Die erhaltene Emulsion enthielt 58 Gew.-% nichtflüchtige Bestandteile und wies einen Toluolgehalt von 0,1 Gew.-% auf. Der Alkoholgehalt lag an der Nachweisgrenze der Bestimmungsmethode (0,04 Gew.-%). 95% der Emulsionströpfchen waren kleiner als 1µm. Im Zentrifugentest waren nach 10 min bei 3000 min⁻¹ keine Veränderungen zu beobachten.

### Beispiel 4

Durchführung analog Beispiel 2, jedoch wurde als Emulgator ein Polyoxyethylen(40)tridecylalkohol eingesetzt. Die erhaltene Emulsion wies einen Toluolgehalt von 0,1 Gew.-% auf. Der Gehalt an nichtflüchtigen Bestandteilen betrug 57 Gew.-%. 93% der Emulsionströpfchen waren kleiner als 1 µm. Im Zentrifugentest waren nach 10 min bei 3000 min⁻¹ keine Veränderungen zu beobachten.

### Beispiel 5

Analog Beispiel 2, jedoch wurde als Emulgator ein Polyvinylalkohol mit einem Verseifungsgrad von 88 % und einer Viskosität von 26 mPas (gemessen an einer 4%igen wäßrigen Lösung bei 20 °C) eingesetzt. Die erhaltene Emulsion wies einen Toluolgehalt von 0,17 Gew.-% auf. Der Gehalt an nichtflüchtigen Bestandteilen betrug 60 Gew.-%. Die mittlere Teilchengröße (Oberflächenmittel) betrug 3µm. Im Zentrifugentest waren nach 10 min bei 3000 min⁻¹ keine Veränderungen zu beobachten.

### Beispiel 6

Durchführung analog Beispiel 1. Als polymere Organosiliciumverbindung wurde eine 70%ige Lösung eines Polydimethylsiloxans (Viskosität des reinen Siloxans: 0,3 m²/s) verwendet. Es wurde ein Toluol/Wasser-Gemisch im Verhältnis 1,5 zu 1 abdestilliert und die Emul-sion anschließend durch Zugabe von 2000 g Wasser fertiggestellt. Die erhaltene Emulsion wies einen Anteil von 38 Gew.-% an nichtflüchtigen Bestandteilen auf und war stabil. Ihr Toluolanteil betrug weniger als 1 Gew.-%.

### Beispiel 7

Durchführung analog Beispiel 2. Nach Beendigung der Destillation wurden 210 g Octyltriethoxysilan homogen eingearbeitet und die Emulsion anschließend durch Verdünnen mit Wasser fertiggestellt. Die fertige Emulsion wies einen Anteil von 56 Gew.-% nichtflüchtigen Bestandteilen und eine flächenmittlere Teilchengröße von 0,8 µm auf. Ihr Toluolgehalt betrug kleiner 0,1 Gew.-%.

### Beispiel 8 (Vergleichsbeispiel)

Durchführung analog Beispiel 4, jedoch wurde vor Beginn der Destillation die Emulsion in nicht erfindungsgemäßer Weise in eine fließende verdünnte "Öl in Wasser"-Emulsion überführt. Bei der Destillation zerfiel die Emulsion, freies hochviskoses Harz fiel als ein klebriger Klumpen aus und blockierte das Rührwerk. Das Lösemittel konnte nicht entfernt werden.
Dieses Beispiel zeigt, daß es mit einem nicht erfindungsgemäßen Verfahren nicht gelingt, im wesentlichen lösemittelfreie, wäßrige Siliconemulsionen herzustellen.

## Patentansprüche

1. Verfahren zur Herstellung wäßriger Siliconemulsionen, dadurch gekennzeichnet, daß unter intensivem Vermischen zu 100 Gew.-Teilen einer in einem organischen Lösemittel gelösten, polymeren Organosiliciumverbindung der allgemeinen Formel
Rₐ (R¹O)_{b}SiO_{(4-a-b)/2} (I),
wobei R gleiche und/oder verschiedene, gesättigte und/oder ungesättigte, substituierte und/oder unsubstituierte einwertige Kohlenwasserstoffreste mit 1 bis 30 Kohlenstoffatomen sowie R¹ Wasserstoff und/oder C₁₋₄-Alkyl bedeuten, a einen Wert zwischen 0,6 und 2,4 sowie b einen Wert zwischen 0 und 0,5 annehmen,
0,1 bis 20 Gew.-Teile eines Emulgators sowie 1 bis 50 Gew.-Teile Wasser gegeben werden, nach Erreichen einer homogenen, nicht mehr fließfähigen Mischung das organische Lösemittel als Lösemittel/Wasser-Gemisch abgetrennt wird und anschließend die für das Erreichen der gewünschten Endkonzentration benötigte Wassermenge sowie gegebenenfalls bekannte Additive homogen eingearbeitet werden.

2. Verfahren nach Anspruch 1, dadurch gekennzeichnet, daß eine polymere Organosiliciumverbindung der allgemeinen Formel (I) eingesetzt wird, worin a einen Wert zwischen 0,6 und 1,6 sowie b einen Wert zwischen 0,001 und 0,1 annehmen.

3. Verfahren nach Anspruch 1, dadurch gekennzeichnet, daß eine polymere Organosiliciumverbindung der allgemeinen Formel (I) eingesetzt wird, worin a einen Wert zwischen 1,8 und 2,1 sowie b einen Wert zwischen 0 und 0,05 annehmen.

4. Verfahren nach Anspruch 1 bis 3, dadurch gekennzeichnet, daß die polymere Organosiliciumverbindung der allgemeinen Formel (I) in einem organischen Lösemittel mit einem Siedepunkt (bei Normaldruck) kleiner 200°C gelöst vorliegt.

5. Verfahren nach Anspruch 4, dadurch gekennzeichnet, daß als Lösemittel Toluol verwendet wird.

6. Verfahren nach Anspruch 1 bis 5, dadurch gekennzeichnet, daß die polymere Siliciumverbindung in einer Konzentration von mindestens 60 Gew.-% in dem organischen Lösemittel gelöst eingesetzt wird.

7. Verfahren nach Anspruch 6, dadurch gekennzeichnet, daß die polymere Siliciumverbindung in einer Konzentration zwischen 80 und 95 Gew.-% in dem organischen Lösemittel gelöst eingesetzt wird.

8. Verfahren nach Anspruch 1, dadurch gekennzeichnet, daß weniger als 5 Gew.-% Emulgator, bezogen auf die polymere Organosiliciumverbindung, verwendet wird.

9. Verfahren nach Anspruch 1, dadurch gekennzeichnet, daß als Emulgatoren nichtionogene Emulgatoren verwendet werden.

10. Verfahren nach Anspruch 9, dadurch gekennzeichnet, daß als nichtionogene Emulgatoren Polyethylenglycolether oder -ester von natürlichen Glyceriden und/oder natürlichen oder synthetischen Alkoholen bzw. Carbonsäuren mit 8 bis 24 Kohlenstoffatomen eingesetzt werden.

11. Verfahren nach Anspruch 9, dadurch gekennzeichnet, daß als nichtionogene Emulgatoren partiell oder vollständig verseifte Polyvinylacetate eingesetzt werden.

12. Verfahren nach Anspruch 1, dadurch gekennzeichnet, daß nach Zugabe des Emulgators 5 bis 25 Gew.-Teile Wasser, bezogen auf die polymere Organosiliciumverbindung, zugesetzt werden.

13. Verfahren zur Herstellung wäßriger Siliconemulsionen, dadurch gekennzeichnet, daß unter intensivem Vermischen zu 100 Gew.-Teilen einer in einem organischen Lösemittel gelösten, polymeren Organosiliciumverbindung der allgemeinen Formel
Rₐ (R¹O)_{b}SiO_{(4-a-b)/2} (I),
wobei R gleiche und/oder verschiedene, gesättigte und/oder ungesättigte, substituierte und/oder unsubstituierte einwertige Kohlenwasserstoffreste mit 1 bis 30 Kohlenstoffatomen sowie R¹, Wasserstoff und/oder C₁₋₄-Alkyl bedeuten, a einen Wert zwischen 0,6 und 2,4 sowie b einen Wert zwischen 0 und 0,5 annehmen,
0,1 bis 20 Gew.-Teile eines Emulgators sowie 1 bis 50 Gew.-Teile Wasser gegeben werden, nach Erreichen einer homogenen, nicht mehr fließfähigen Mischung das organische Lösemittel als Lösemittel/Wasser-Gemisch abgetrennt, anschließend 1 bis 100 Gew.-Teile einer flüssigen monomeren, oligomeren und/oder polymeren Organosiliciumverbindung und dann die für das Erreichen der gewünschten Endkonzentration benötigte Wassermenge sowie gegebenenfalls bekannte Additive homogen eingearbeitet werden.

14. Verfahren nach Anspruch 13, dadurch gekennzeichnet, daß als monomere Organosiliciumverbindung eine oder mehrere Verbindungen der allgemeinen Formel
R²Si(R³O)₃ (II),
wobei R² gesättigte und/oder ungesättigte, substituierte und/oder unsubstituierte einwertige Kohlenwasserstoffreste mit 4 bis 30 Kohlenstoffatomen sowie R³ Wasserstoff und/oder C₂₋₄-Alkyl bedeuten, homogen eingearbeitet werden.

15. Verfahren nach Anspruch 13, dadurch gekennzeichnet, daß als oligomere Organosiliciumverbindung ein partielles Hydrolysat und/ oder Kondensat von einer oder mehrerer Verbindungen der allgemeinen Formel
RₐSi(R¹O)_{b} (III),
wobei R und R¹ die oben angegebene Bedeutung sowie a einen Wert von 0 oder 1 und a+b einen Wert von 4 haben, mit einer Molmasse kleiner 1000 g/mol homogen eingearbeitet werden.

16. Verfahren nach Anspruch 13, dadurch gekennzeichnet, daß als polymere Organosiliciumverbindung eine Verbindung der allgemeinen Formel (I) mit einer Viskosität bei Raumtemperatur von weniger als 100 000 mm²/s homogen eingearbeitet wird.

17. Verfahren nach Anspruch 13 bis 16, dadurch gekennzeichnet, daß 5 bis 20 Gew.-Teile der monomeren, oligomeren und/oder polymeren Organosiliciumverbindung homogen eingearbeitet werden.

## Claims

1. Process for preparing aqueous silicone emulsions, characterized in that from 0.1 to 20 parts by weight of an emulsifier and from 1 to 50 parts by weight of water are added with vigorous stirring to a polymeric organosilicon compound of the general formula
Rₐ (R¹O)_{b}SiO_{(4-a-b)/2} (I),
where R is identical and/or different, saturated and/or unsaturated, substituted and/or unsubstituted monovalent hydrocarbon radicals having 1 to 30 carbon atoms and R¹ is hydrogen and/or C₁₋₄-alkyl, a adopts a value between 0.6 and 2.4 and b adopts a value between 0 and 0.5, the said compound being dissolved in an organic solvent, and, after a homogeneous mixture which is no longer flowable has been obtained, the organic solvent is separated off as a solvent/water mixture and, subsequently, the amount of water required to achieve the desired final concentration and, if desired, any known additives are incorporated homogeneously.

2. Process according to Claim 1, characterized in that a polymeric organosilicon compound of the general formula (I) is employed in which a adopts a value between 0.6 and 1.6 and b adopts a value between 0.001 and 0.1.

3. Process according to Claim 1, characterized in that a polymeric organosilicon compound of the general formula (I) is employed in which a adopts a value between 1.8 and 2.1 and b adopts a value between 0 and 0.05.

4. Process according to Claim 1 to 3, characterized in that the polymeric organosilicon compound of the general formula (I) is present as a solution in an organic solvent having a boiling point (at atmospheric pressure) of less than 200°C.

5. Process according to Claim 4, characterized in that toluene is used as solvent.

6. Process according to Claim 1 to 5, characterized in that the polymeric silicon compound is employed as a solution in a concentration of at least 60% by weight in the organic solvent.

7. Process according to Claim 6, characterized in that the polymeric silicon compound is employed as a solution in a concentration of between 80 and 95% by weight in the organic solvent.

8. Process according to Claim 1, characterized in that less than 5% by weight of emulsifier, based on the polymeric organosilicon compound, is used.

9. Process according to Claim 1, characterized in that the emulsifiers used are nonionic emulsifiers.

10. Process according to Claim 9, characterized in that nonionic emulsifiers employed are polyethylene glycol ethers or polyethylene glycol esters of natural glycerides and/or natural or synthetic alcohols or carboxylic acids, respectively, having 8 to 24 carbon atoms.

11. Process according to Claim 9, characterized in that nonionic emulsifiers employed are partially or fully hydrolysed polyvinyl acetates.

12. Process according to Claim 1, characterized in that following the addition of the emulsifier from 5 to 25 parts by weight of water, based on the polymeric organosilicon compound, are added.

13. Process for preparing aqueous silicone emulsions, characterized in that from 0.1 to 20 parts by weight of an emulsifier and from 1 to 50 parts by weight of water are added with vigorous stirring to a polymeric organosilicon compound of the general formula
Rₐ (R¹O)_{b}SiO_{(4-a-b)/2} (I),
where R is identical and/or different, saturated and/or unsaturated, substituted and/or unsubstituted monovalent hydrocarbon radicals having 1 to 30 carbon atoms and R¹ is hydrogen and/or C₁₋₄-alkyl, a adopts a value between 0.6 and 2.4 and b adopts a value between 0 and 0.5, the said compound being dissolved in an organic solvent, and, after a homogeneous mixture which is no longer flowable has been obtained, the organic solvent is separated off as a solvent/water mixture, subsequently from 1 to 100 parts by weight of a liquid monomeric, oligomeric and/or polymeric organosilicon compound and then of the amount of water required to achieve the desired final concentration and, if desired, any known additives are incorporated homogeneously.

14. Process according to Claim 13, characterized in that one or more compounds of the general formula
R²Si(R³O)₃ (II),
where R² is saturated and/or unsaturated, substituted and/or unsubstituted monovalent hydrocarbon radicals having 4 to 30 carbon atoms and R³ is hydrogen and/or C₂₋₄-alkyl, are incorporated homogeneously as the monomeric organosilicon compound.

15. Process according to Claim 13, characterized in that a partial hydrolysate and/or condensate of one or more compounds of the general formula
RₐSi(R¹O)_{b} (III),
where R and R¹ are as defined above and a has a value of 0 or 1 and a+b has a value of 4, having a molar mass of less than 1000 g/mol, are incorporated homogeneously as the oligomeric organosilicon compound.

16. Process according to Claim 13, characterized in that a compound of the general formula (I) having a viscosity at room temperature of less than 100,000 mm²/s is incorporated homogeneously as the polymeric organosilicon compound.

17. Process according to Claim 13 to 16, characterized in that from 5 to 20 parts by weight of the monomeric, oligomeric and/or polymeric organosilicon compound are incorporated homogeneously.

## Revendications

1. Procédé de préparation d'émulsions aqueuses de silicone, caractérisé en ce que, sous mélange vigoureux, on ajoute à 100 parties en poids d'un composé organosilicié polymère, dissous dans un solvant organique, de formule générale
Rₐ (R¹O)_{b}SiO_{(4-a-b)/2} (I),
dans laquelle R signifie des radicaux hydrocarbonés monovalents identiques et/ou différents, saturés et/ou insaturés, substitués et/ou non substitués ayant de 1 à 30 atomes de carbone de même que R¹ signifie un hydrogène et /ou un alkyle en C₁-C₄, a prend une valeur entre 0,6 et 2,4 de même que b prend une valeur entre 0 et 0,5, 0,1 à 20 parties en poids d'un émulsionnant ainsi que 1 à 50 parties en poids d'eau, le solvant organique est séparé en tant que mélange solvant/eau après obtention d'un mélange homogène qui n'est plus fluide, puis la quantité d'eau ainsi que, le cas échéant, des additifs connus nécessaires à l'obtention de la concentration finale souhaitée sont incorporés de manière homogène.

2. Procédé suivant la revendication 1, caractérisé en ce qu'on utilise un composé organosilicié polymère de formule générale (I), dans laquelle a prend une valeur entre 0,6 et 1,6 et b prend une valeur entre 0,001 et 0,1.

3. Procédé suivant la revendication 1, caractérisé en ce qu'on utilise un composé organosilicié polymère de formule générale (I), dans laquelle a prend une valeur entre 1,8 et 2,1 et b prend une valeur entre 0 et 0,05.

4. Procédé suivant les revendications 1 à 3, caractérisé en ce que le composé organosilicié polymère de formule générale (I) est présent sous forme dissoute dans un solvant organique avec un point d'ébullition (à pression normale) inférieur à 200°C.

5. Procédé suivant la revendication 4, caractérisé en ce qu'on utilise du toluène comme solvant.

6. Procédé suivant les revendications 1 à 5, caractérisé en ce qu'on utilise le composé silicié polymère sous forme dissoute dans le solvant organique à une concentration d'au moins 60% en poids.

7. Procédé suivant la revendication 6, caractérisé en ce que le composé silicié polymère est utilisé sous forme dissoute dans le solvant organique à une concentration entre 80 et 95% en poids.

8. Procédé suivant la revendication 1, caractérisé en ce qu'on utilise moins de 5% en poids d'émulsionnant, sur base du composé organosilicié polymère.

9. Procédé suivant la revendication 1, caractérisé en ce qu'on utilise comme émulsionnants des émulsionnants non ionogènes.

10. Procédé suivant la revendication 9, caractérisé en ce qu'on utilise comme émulsionnants non ionogènes un éther ou ester de polyéthylèneglycol de glycérides naturels et/ou d'alcools ou, selon le cas, d'acides carboxyliques naturels ou synthétiques ayant de 8 à 24 atomes de carbone.

11. Procédé suivant la revendication 9, caractérisé en ce qu'on utilise comme émulsionnants non ionogènes des poly(acétate de vinyle) partiellement ou complètement saponifiés.

12. Procédé suivant la revendication 1, caractérisé en ce qu'on ajoute après addition de l'émulsionnant 5 à 25 parties en poids d'eau, sur base du composé organosilicié polymère.

13. Procédé de préparation d'émulsions aqueuses de silicone, caractérisé en ce que, sous mélange vigoureux, on ajoute à 100 parties en poids d'un composé organosilicié polymère, dissous dans un solvant organique, de formule générale
Rₐ (R¹O)_{b}SiO_{(4-a-b)/2} (I),
dans laquelle R signifie des radicaux hydrocarbonés monovalents identiques et/ou différents, saturés et/ou insaturés, substitués et/ou non substitués ayant de 1 à 30 atomes de carbone de même que R¹ signifie un hydrogène et/ou un alkyle en C₁-C₄, a prend une valeur entre 0,6 et 2,4 de même que b prend une valeur entre 0 et 0,5, 0,1 à 20 parties en poids d'un émulsionnant ainsi que 1 à 50 parties en poids d'eau, le solvant organique est séparé en tant que mélange solvant/eau après obtention d'un mélange homogène qui n'est plus fluide, puis 1 à 100 parties en poids d'un composé organosilicié liquide monomère, oligomère et/ou polymère et ensuite la quantité d'eau ainsi que, le cas échéant, des additifs connus nécessaires à l'obtention de la concentration finale souhaitée sont incorporés de manière homogène.

14. Procédé suivant la revendication 13, caractérisé en ce qu'on incorpore de manière homogène comme composé organosilicié monomère un ou plusieurs composés de formule générale
R²Si(R³O)₃ (II),
dans laquelle R² signifie des radicaux hydrocarbonés monovalents saturés et/ou insaturés, substitués et/ou non substitués ayant de 4 à 30 atomes de carbone de même que R³ signifie un hydrogène et/ou un alkyle en C₂-C₄.

15. Procédé suivant la revendication 13, caractérisé en ce qu'on incorpore de manière homogène comme composé organosilicié oligomère un hydrolysat et/ou un condensat partiel d'un ou de plusieurs composés de formule générale
RₐSi(R¹O)_{b} (III),
dans laquelle R et R¹ ont la signification donnée ci-dessus de même que a a une valeur de 0 ou 1 et a+b a une valeur de 4, avec une masse molaire inférieure à 1000 g/mole.

16. Procédé suivant la revendication 13, caractérisé en ce qu'on incorpore de manière homogène comme composé organosilicié polymère un composé de formule générale (I) avec une viscosité à température ambiante inférieure à 100 000 mm²/s.

17. Procédé suivant les revendications 13 à 16, caractérisé en ce qu'on incorpore de manière homogène 5 à 20 parties en poids du composé organosilicié monomère, oligomère et/ou polymère.
